(19) Europäisches Patentamt / European Patent Office / Office européen des brevets

(11) **EP 4 397 406 A1**

(12) **EUROPEAN PATENT APPLICATION**
published in accordance with Art. 153(4) EPC

(43) Date of publication:
**10.07.2024 Bulletin 2024/28**

(21) Application number: **22864499.3**

(22) Date of filing: **29.08.2022**

(51) International Patent Classification (IPC):
**B01J 23/83** (2006.01)    **C01B 7/04** (2006.01)

(52) Cooperative Patent Classification (CPC):
**B01J 23/83; C01B 7/04**

(86) International application number:
**PCT/JP2022/032410**

(87) International publication number:
**WO 2023/032917 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.09.2021 JP 2021144293**

(71) Applicant: **Mitsui Chemicals, Inc.**
**Tokyo 104-0028 (JP)**

(72) Inventors:
• **NIISHIRO, Ryo**
**Sodegaura-shi, Chiba 299-0265 (JP)**
• **NAKAGAWA, Yusuke**
**Sodegaura-shi, Chiba 299-0265 (JP)**
• **SONE, Hideki**
**Sodegaura-shi, Chiba 299-0265 (JP)**
• **OGAWA, Miku**
**Sodegaura-shi Chiba 299-0265 (JP)**

(74) Representative: **Hoffmann Eitle**
**Patent- und Rechtsanwälte PartmbB**
**Arabellastraße 30**
**81925 München (DE)**

(54) **HYDROCHLORIC ACID OXIDATION CATALYST AND METHOD FOR PRODUCING CHLORINE**

(57)    A catalyst is a hydrochloric acid oxidation catalyst for oxidizing hydrochloric acid. The catalyst includes a carrier, and copper, an alkali metal, and a rare earth element that are carried by the carrier. The catalyst is composed of particles. A rate of change in crushing strength before and after heating is 0% or more and 40% or less.

$$\text{Rate of change in crushing strength before and after heating} = [I1 - I0]/I0 \times 100 \ (\%)$$

I0: Crushing strength before heating
I1: Crushing strength after heating

FIG. 1

EP 4 397 406 A1

**Description**

TECHNICAL FIELD

The present invention relates to a hydrochloric acid oxidation catalyst and a method for producing chlorine. More particularly, the present invention relates to a hydrochloric acid oxidation catalyst for oxidizing hydrochloric acid, and a method for producing chlorine using the catalyst.

BACKGROUND ART

Hydrochloric acid oxidation catalysts are conventionally used to oxidize hydrochloric acid with oxygen to produce chlorine.
For example, a hydrochloric acid oxidation catalyst in which copper, potassium and samarium are dispersed in silica having a particle size of 10 to 20 meshes has been proposed (see, for example, Patent Document 1 below). A size of 10 to 20 meshes corresponds to a mesh opening of 0.8 mm to 2 mm.

Citation List

Patent Document

Patent Document 1: WO 2009/041384

SUMMARY OF THE INVENTION

PROBLEM TO BE SOLVED BY THE INVENTION

However, the hydrochloric acid oxidation catalyst described in Patent Document 1 may lose its shape and become powdery (powdering) due to a long time use (operation of chlorine production apparatus). This may result in clogging, thereby failing to continue the production of chlorine.
The present invention provides a hydrochloric acid oxidation catalyst and a method for producing chlorine that are capable of suppressing powdering.

MEANS FOR SOLVING THE PROBLEM

The present invention (1) includes a hydrochloric acid oxidation catalyst for oxidizing hydrochloric acid, the catalyst including a carrier; and copper, an alkali metal, and a rare earth element that are carried by the carrier, the catalyst being composed of particles, in which a rate of change in crushing strength before and after heating is 0% or more and 40% or less, the rate being determined by the following measurement.
Average value of particle sizes: An average value of particle sizes of 100 particles is obtained.
Crushing strength before heating I0: A strength when particles corresponding to the average value of the particle sizes are broken is obtained as "crushing strength before heating 10".
Crushing strength after heating I1: A strength when particles corresponding to the average value of the particle sizes are broken after heating of the hydrochloric acid oxidation catalyst at 360°C for 3 hours under ambient atmosphere is obtained as "crushing strength after heating I1".
The "rate of change in crushing strength before and after heating" is determined by the following equation:

$$\text{Rate of change in crushing strength before and after heating} = [I1 - I0]/I0 \times 100\ (\%)$$

The present invention (2) includes the hydrochloric acid oxidation catalyst described in (1), in which the average value of the particle sizes is 1.5 mm or more and 6 mm or less.
The present invention (3) includes the hydrochloric acid oxidation catalyst described in (1) or (2), in which the carrier contains alumina.
The present invention (4) includes the hydrochloric acid oxidation catalyst described in any one of the above-described (1) to (3), being a fixed-bed catalyst.
The present invention (5) includes a method for producing chlorine, in which hydrochloric acid is brought into contact with oxygen in the presence of the hydrochloric acid oxidation catalyst described in (1) or (2).
The present invention (6) includes the method for producing chlorine described in (5), in which the hydrochloric acid oxidation catalyst is used as a fixed-bed catalyst.

EFFECTS OF THE INVENTION

The hydrochloric acid oxidation catalyst and the method for producing chlorine according to the present invention can suppress powdering.

BRIEF DESCRIPTION OF THE DRAWINGS

FIG. 1 is a graph for determining crushing strength in Example: In the graph, the axis of abscissas (x) is the particle size, and the axis of ordinates (y) is the strength; and in the graph, the particle size and strength of each of 100 particles are plotted, and an approximate straight line $y = ax + b$ is drawn.

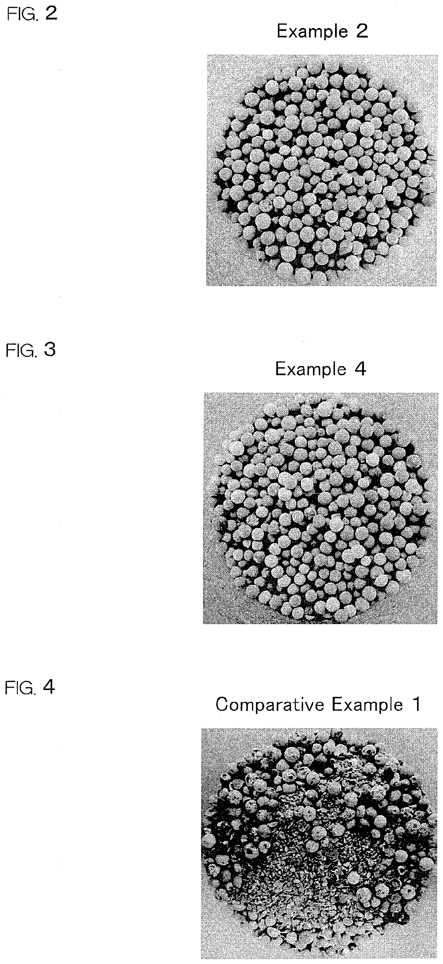

FIG. 2 is an image-processed photograph of a hydrochloric acid oxidation catalyst in Example 2 after a 35-day hydrochloric acid oxidation test.
FIG. 3 is an image-processed photograph of the hydrochloric acid oxidation catalyst in Example 4 after the 35-day hydrochloric acid oxidation test.
FIG. 4 is an image-processed photograph of the hydrochloric acid oxidation catalyst in Comparative Example 1 after the 35-day hydrochloric acid oxidation test.

DESCRIPTION OF THE EMBODIMENTS

[Hydrochloric acid oxidation catalyst]

The hydrochloric acid oxidation catalyst of the present invention is a catalyst for oxidizing hydrochloric acid. The hydrochloric acid oxidation catalyst is hereinafter simply referred to as catalyst.

[Properties of catalyst]

The catalyst has a particulate shape. That is, the catalyst is composed of many particles. The particulate shape includes particle shapes and granular shapes.
The shape of the particle is not particularly limited, and examples thereof include a generally spherical shape, a generally cylindrical column shape, and a generally cylindrical shape (or a generally noodle shape).
An average value of particle sizes of the catalyst is, for example, 1 mm or more, preferably 1.5 mm or more, more preferably 2 mm or more, even more preferably 2.5 mm or more, and, for example, 10 mm or less, preferably 6 mm or less, more preferably 4 mm or less. When the average value of the particle sizes of the catalyst is more than the above-described lower limit, a loss of pressure can be reduced, and furthermore, the catalyst can be suitably used as a fixed-bed catalyst. On the other hand, when the average value of the particle sizes of the catalyst is less than the above-described upper limit, a large contact area with hydrochloric acid can be secured and a yield can be increased.
The average value of the particle sizes of the catalyst is obtained by averaging the particle sizes of 100 particles of the catalyst.
To be specific, when the catalyst has a generally spherical shape, the diameter of each of the 100 particles of the catalyst is measured, and an average value thereof is obtained. To be specific, the diameters of the 100 particles of the catalyst are measured, and an average value thereof is determined.
A rate of change in crushing strength before and after heating is 0% or more and 40% or less. The rate of change in crushing strength before and after heating is measured as follows.
Crushing strength before heating I0: A strength when particles corresponding to the average value of the particle sizes are broken is obtained as "crushing strength before heating I0".
Crushing strength after heating I1: A strength when particles corresponding to the average value of the particle sizes are broken after heating of the catalyst at 360°C for 3 hours under ambient atmosphere is obtained as "crushing strength after heating I1".
The "rate of change in crushing strength before and after heating" is determined by the following equation:

$$\text{Rate of change in crushing strength before and after heating} = [I1 - I0]/I0 \times 100\ (\%)$$

Both the crushing strength before heating I0 and the crushing strength after heating I1 are strengths of the particles corresponding to the average value of the particle sizes.

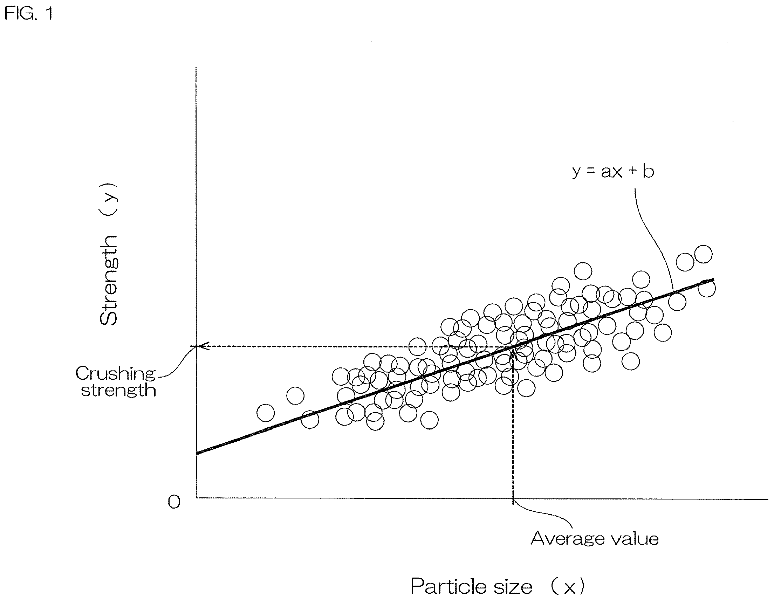

To be more specific, a method for measuring the crushing strength is described. Each of the 100 particles of which the average value of the particle sizes is measured is set on a load measuring device, and the strength when each of the 100 particles is broken is obtained. Subsequently, as shown in FIG. 1, the particle size and strength of each of the 100 particles are plotted on a graph where the axis of abscissas (x) is the particle size, and the axis of ordinates (y) is the strength. That is, a total of 100 dots are plotted on the graph. Based on these, an approximate straight line y = ax + b is drawn on the graph. Then, the strength corresponding to the average value of the particle sizes on the approximate straight line is obtained as crushing strength.

The rate of change in crushing strength before and after heating is represented by the equation $[I1-I0]/I0 \times 100$ (%), and where 0% or positive means that powdering of the catalyst can be suppressed, negative means that the catalyst is powdered.

Powdering means a phenomenon in which the particle size is reduced by such phenomenon. Powdering includes a phenomenon in which the catalyst maintains a particulate appearance but disintegrates (crumbles) into powder by a light touch of the hand.

Therefore, when the rate of change in the crushing strength of the catalyst before and after heating is less than 0%, the catalyst is powdered due to long time use. The powdered catalyst causes clogging in the reactor where the catalyst is accommodated, thereby making it impossible to operate the reactor.

On the other hand, when the rate of change in the crushing strength of the catalyst before and after heating exceeds 40%, the active catalyst structure cannot be maintained.

[Carrier, copper, alkali metal, rare earth element]

This catalyst includes a carrier, and copper, an alkali metal, and a rare earth element.

[Carrier]

The carrier maintains the shape of the catalyst. The shape of the carrier and the average value of particle sizes of the carrier are the same as those of the above-described catalyst.

The material of the carrier is not particularly limited, and examples thereof include alumina, silica alumina, silica, titania and zirconia. For the material of the carrier, preferably, alumina and silica alumina are used, more preferably, alumina is used in view of extending catalyst life.

The ratio of alumina in the silica alumina is, for example, 1% by mass or more, preferably 5% by mass or more, and 75% by mass or less, preferably 45% by mass or less, more preferably 25% by mass or less.

[Active components]

Copper, an alkali metal, and a rare earth element are active components of the catalyst and are dispersed in (carried by) the carrier. The copper, alkali metal, and rare earth element, and a combination thereof are described in detail in, for example, WO 2009/041384.

Examples of the alkali metal include lithium, sodium, potassium, rubidium, cesium and francium, and preferably, potassium is used.

Examples of the rare earth element include 17 kinds including scandium, yttrium, and lanthanoid (15 kinds). Preferably, lanthanoid is used, more preferably, praseodymium, neodymium, lanthanum, europium, and samarium are used, further preferably, samarium is used.

The ratio of each of the copper, alkali metal, and rare earth element in the catalyst is, for example, 1% by mass or more and 25% by mass or less. The ratio of the total amount of the copper, alkali metal, and rare earth element in the catalyst is, for example, 5% by mass or more and 50% by mass or less. The parts by mass of the alkali metal relative to 100 parts by mass of the copper is, for example, 20 parts by mass or more, preferably 30 parts by mass or more, and for example, 200 parts by mass or less, preferably 180 parts by mass or less. The parts by mass of the rare earth element relative to 100 parts by mass of the copper is, for example, 20 parts by mass or more, preferably 30 parts by mass or more, and for example, 350 parts by mass or less, preferably 300 parts by mass or less.

[Method for producing catalyst, oxidation of hydrochloric acid]

Next, a method for producing the catalyst and oxidation of hydrochloric acid using the catalyst are described.

First, a carrier and active components (copper, alkali metal, and rare earth element) are prepared.

The active components are prepared as an active component-containing aqueous solution containing, for example, compounds such as chlorides thereof and oxides thereof. The active component-containing aqueous solution contains acidic water (specifically, aqueous hydrochloric acid), and in the active component-containing aqueous solution, the above-described compounds are dissolved in the acidic water.

Thereafter, the carrier and the active component-containing aqueous solution are blended, followed by heating and drying. Prior to heating, as necessary, the pressure of the atmosphere can be reduced.

Then, a particulate catalyst is obtained in which the active components are dispersed in the carrier.

[Use of catalyst]

The catalyst is used, for example, in any of a batch type and a flow type (fixed bed, fluidized bed, and moving bed), preferably in a flow type, more preferably in a fixed bed.

For example, a fixed-bed reactor is filled with the catalyst. The catalyst forms a catalyst layer in the reactor.

To oxidize hydrochloric acid using the catalyst, for example, hydrochloric acid is brought into contact with oxygen in the above-described reactor. The oxidation of hydrochloric acid produces chlorine. Therefore, in the method for producing chlorine, hydrochloric acid is brought into contact with oxygen in the presence of the hydrochloric acid oxidation catalyst.

In this manner, hydrochloric acid is oxidized by oxygen to produce chlorine (production of chlorine) and also produce water as byproduct.

[Modification]

As necessary, the catalyst can be heated (pretreated and calcined) at high temperatures. Heating is performed under ambient atmosphere. The heating temperature is, for example, 200°C or more, preferably 300°C or more, and for example, 600°C or less, preferably 500°C or less. The heating time is, for example, 1 hour or more, preferably 2 hours or more, and for example, 10 hours or less, preferably 5 hours or less.

[Effects]

Since the rate of change in the crushing strength of the catalyst before and after heating is 0% or more, it is possible to suppress powdering of the catalyst after long-term use.

On the other hand, since the rate of change in the crushing strength of the catalyst before and after heating is 40% or less, the active catalyst structure can be maintained.

Further, when the carrier is alumina, the catalyst life can be extended.

Further, when the average value of the particle sizes of the catalyst is 1.5 mm or more, a loss of pressure can be reduced, and furthermore, the catalyst can be suitably used as a fixed-bed catalyst. On the other hand, when the average value of the particle sizes of the catalyst is 6 mm or less, a larger contact area with hydrochloric acid can be secured, resulting in a higher yield.

However, when the fixed-bed catalyst particles are powdered, clogging occurs, thereby making it impossible to flow hydrochloric acid through the reactor where the fixed-bed catalyst is accommodated, which may make it difficult to continue operation.

However, since powdering of the catalyst is suppressed as described above, operational difficulties caused by powdering can be delayed as much as possible.

Example

Hereinafter, the present invention will be described more in detail with reference to Examples and Comparative Examples, but not limited thereto. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS." "Parts" and "%" are based on mass unless otherwise specified in the following.

Example 1

According to the formulations listed in Table 1, water, active components, and aqueous hydrochloric acid were mixed to prepare an active component-containing aqueous solution.

Thereafter, the active component-containing aqueous solution was mixed with a spherical carrier made of alumina according to the formulations listed in Table 1. The mixture was then subjected to depressurization, temperature increase, drying, and cooling under the conditions shown in Table 2 to produce a catalyst. The ratios (mass %) of the active components (copper, potassium, and samarium) in the catalyst are shown in Table 3.

Examples 2 to 11 and Comparative Examples 1 to 2

The catalyst was produced in the same manner as in Example 1, except that the ratios of the active components in the active component-containing aqueous solution and the type of the carrier were changed so as to achieve the ratios of the active components listed in Table 3.
In Example 10, silica-alumina having a cylindrical column shape was used as the carrier.
In Example 11, titania having a spherical shape was used as the carrier.
As the carriers in Comparative Examples 1 and 2, spherical silica was used.

<Evaluation>

The following items were evaluated for each of the catalysts in Examples 1 to 11 and Comparative Examples 1 and 2. These results are shown in Table 3.

(Average value of particle sizes of catalyst)

An average value of particle sizes (diameters) of 100 particles of the catalyst in each of Examples and Comparative Examples was determined.

(Measurement of rate of change in crushing strength before and after heating)

As for the catalyst in each of Examples 1 to 11 and Comparative Examples 1 and 2, a rate of change in crushing strength before and after heating was determined by the following method.
Crushing strength before heating I0: Each of the 100 particles of which the particle sizes were measured was set on a load measuring device (digital type hardness tester, manufactured by Fujiwara Scientific Company Co., Ltd., KHT-40N), and the strength when each of the 100 particles was broken was obtained. As shown in FIG. 1, the particle size and strength of each of the 100 particles were plotted on the graph where the axis of abscissas (x) was the particle size, and the axis of ordinates (y) was the strength. Then, the strength corresponding to the average value of the particle sizes on the approximate straight line was obtained as "crushing strength before heating I0."
Crushing strength after heating I1: After the catalyst was heated at 360°C for 3 hours under ambient atmosphere, each of the 100 particles was set on the load measuring device (digital type hardness tester, manufactured by Fujiwara Scientific Company Co., Ltd., KHT-40N), and the strength when each of the 100 particles was broken was obtained. The particle size and strength of each of the 100 particles were plotted on the graph where the axis of abscissas (x) was the particle size, and the axis of ordinates (y) was the strength. Then, the strength corresponding to the average value of the particle sizes on the approximate straight line was obtained as "crushing strength after heating I1."
The "rate of change in crushing strength before and after heating" was determined by the following equation:

$$\text{Rate of change in crushing strength before and after heating} = [I1 - I0]/I0 \times 100 \; (\%)$$

In the measurement of the strength of the cylindrical column-shaped catalyst in Example 10, the catalyst was set on the hardness tester so that the axial direction of the catalyst was orthogonal to the load direction of the load measuring device.

(Powdering, yield, catalyst life)

A fixed-bed catalytic reactor was prepared by filling a reactor having a length of 4 m and an inner diameter of 0.027 m with 2 L (apparent volume) of the catalyst in each of Examples 1 to 11 and Comparative Examples 1 and 2. The reactor is configured to be temperature adjustable.
Oxygen and nitrogen were both flown through the fixed-bed catalytic reactor at a superficial velocity of 0.26 m/s and 0.14 m/s, respectively, the reactor temperature was set to 360°C, and pretreatment was performed for 3 hours. Subsequently, hydrochloric acid and oxygen were both flown through the reactor at a superficial velocity of 0.3 m/s and 0.1 m/s, respectively. The reactor temperature was adjusted so that a temperature (internal temperature) of a hot spot of the filled catalyst (catalyst layer) was 360°C. The hot spot is a portion of the catalyst layer that becomes a high temperature spot because the above-described reaction is an exothermic reaction.
A yield of chlorine was then determined after 35 days. The yield of chlorine was determined based on the description in WO 2009/041384.

After 35 days passed, the catalyst was removed and visually observed to confirm the degree of powdering of the catalyst (including the presence or absence of powdering).

Catalyst life was evaluated by the degree of powdering. The criteria are as follows.

Excellent: Powdering was not observed.
Good: Powdering was slightly observed.
Bad: Powdering was observed.

[Table 1]

TABLE 1

| Formulation of catalyst | | [pts. mass] |
|---|---|---|
| Active component-containing aqueous solution | Distilled water | 36.2 |
| | 35% HCl | 9.7 |
| | $Sm_2O_3$ | 6.6 |
| | $CuCl_2 \cdot 2H_2O$ | 7.8 |
| | KCl | 3.3 |
| Carrier (Alumina) | | 37.0 |

[Table 2]

TABLE 2

| Depressurization | Room temperature, 0.023 Mpa |
|---|---|
| Temperature increase | 90°C, 0.041 Mpa, 1 hr |
| Drying | 90°C, 0.023 Mpa, 2 hrs |
| Cooling | Room temperature, 0.023 Mpa, 0.5 hrs |

[Table 3]

TABLE 3

| | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Comp. Ex. 1 | Comp. Ex. 2 |
|---|---|---|---|---|---|---|---|---|---|---|---|---|---|---|---|
| Formulation of catalyst | Carrier | | Alumina | Alumina | Alumina | Alumina | Alumina | Alumina | Alumina | Alumina | Alumina | Silica alumina | Titania | Silica | Silica |
| | Shape | | Spherical | Spherical | Spherical | Spherical | Spherical | Spherical | Spherical | Spherical | Spherical | Cylindrical column | Spherical | Spherical | Spherical |
| | Ratio in catalyst [mass %] | Cu | 6 | 5.5 | 4.5 | 6 | 4.5 | 5.5 | 5 | 4 | 4 | 7 | 2.5 | 7 | 5 |
| | | K | 3.6 | 3.3 | 2.7 | 3.6 | 2.7 | 3.3 | 3 | 2.4 | 2.4 | 4.2 | 1.5 | 4.2 | 3 |
| | | Sm | 12 | 11 | 6 | 6 | 4.5 | 5.5 | 5 | 4 | 4 | 7 | 5 | 7 | 5 |
| Evaluation | Average of particle sizes [mm] | | 3.2 | 3.2 | 3.3 | 3.3 | 3.3 | 3.0 | 3.1 | 3.0 | 1.9 | 3.1 | 3.0 | 2.9 | 2.8 |
| | Rate of change in crushing strength before and after heating [I1 - I0]/I0 (%) | | 13 | 5 | 24 | 6 | 15 | 10 | 18 | 26 | 12 | 4 | 18 | -46 | -67 |
| | Powdering | | Not observed | Not observed | Not observed | Not observed | Not observed | Not observed | Not observed | Not observed | Not observed | Slightly observed | Slightly observed | Observed | Observed |
| | Yield | | 100 | 95 | 68 | 78 | 66 | 73 | 40 | 36 | 59 | 92 | 55 | - | - |
| | Catalyst life | | Excellent | Excellent | Excellent | Excellent | Excellent | Excellent | Excellent | Excellent | Excellent | Good | Good | Bad | Bad |

While the illustrative embodiments of the present invention are provided in the above description, such is for illustrative purpose only and it is not to be construed restrictively. Modification and variation of the present invention that will be obvious to those skilled in the art is to be covered by the following claims.

Industrial Applicability

The hydrochloric acid oxidation catalyst is used in the method for producing chlorine.

**Claims**

1. A hydrochloric acid oxidation catalyst for oxidizing hydrochloric acid,

the catalyst comprising
a carrier; and
copper, an alkali metal, and a rare earth element that are carried by the carrier,
the catalyst being composed of particles,
wherein a rate of change in crushing strength before and after heating is 0% or more and 40% or less, the rate being determined by the following measurement.

Average value of particle sizes: An average value of particle sizes of 100 particles is obtained.
Crushing strength before heating I0: A strength when particles corresponding to the average value of the particle sizes are broken is obtained as "crushing strength before heating I0".
Crushing strength after heating I1: A strength when particles corresponding to the average value of the particle sizes are broken after heating of the hydrochloric acid oxidation catalyst at 360°C for 3 hours under ambient atmosphere is obtained as "crushing strength after heating I1".

The "rate of change in crushing strength before and after heating" is determined by the following equation:

$$\text{Rate of change in crushing strength before and after heating} = [I1 - I0]/I0 \times 100\ (\%)$$

2. The hydrochloric acid oxidation catalyst according to claim 1, wherein the average value of the particle sizes is 1.5 mm or more and 6 mm or less.

3. The hydrochloric acid oxidation catalyst according to claim 1, wherein the carrier contains alumina.

4. The hydrochloric acid oxidation catalyst according to claim 1, being a fixed-bed catalyst.

5. A method for producing chlorine, wherein hydrochloric acid is brought into contact with oxygen in the presence of the hydrochloric acid oxidation catalyst according to claim 1.

6. The method for producing chlorine according to claim 5, wherein the hydrochloric acid oxidation catalyst is used as a fixed-bed catalyst.

FIG. 1

FIG. 2

Example 2

FIG. 3

Example 4

FIG. 4

Comparative Example 1

## INTERNATIONAL SEARCH REPORT

International application No.

**PCT/JP2022/032410**

### A. CLASSIFICATION OF SUBJECT MATTER

***B01J 23/83***(2006.01)i; ***C01B 7/04***(2006.01)i
FI:   B01J23/83 M; C01B7/04 A

According to International Patent Classification (IPC) or to both national classification and IPC

### B. FIELDS SEARCHED

Minimum documentation searched (classification system followed by classification symbols)

B01J21/00-38/74 C01B7/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580 /JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| Y | JP 2009-505817 A (BASF SE) 12 February 2009 (2009-02-12)<br>claims, paragraphs [0007]-[0026] | 1-6 |
| Y | JP 2007-55879 A (SUMITOMO CHEMICAL CO., LTD.) 08 March 2007 (2007-03-08)<br>paragraphs [0007], [0008], [0023]-[0025], [0032], examples 1-3 | 1-6 |
| Y | JP 2006-219325 A (SUMITOMO CHEMICAL CO., LTD.) 24 August 2006 (2006-08-24)<br>paragraphs [0007], [0030], examples 1-3 | 1-6 |
| Y | WO 2009/041384 A1 (MITSUI CHEMICALS INC.) 02 April 2009 (2009-04-02)<br>claims 1-10, paragraph [0027] | 1-6 |
| Y | JP 52-5473 B1 (KUREHA CHEMICAL IND CO., LTD.) 14 February 1977 (1977-02-14)<br>claims, column 2, lines 24-26, examples 3-5 | 1-6 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **07 October 2022** | **25 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2022/032410** |

| Patent document cited in search report | | | Publication date (day/month/year) | Patent family member(s) | | | Publication date (day/month/year) |
| --- | --- | --- | --- | --- | --- | --- | --- |
| JP | 2009-505817 | A | 12 February 2009 | US | 2008/0247941 | A1 | |
| | | | | paragraphs [0006]-[0030] | | | |
| | | | | EP | 1919611 | A1 | |
| | | | | CN | 101272852 | A | |
| | | | | KR | 10-2008-0034213 | A | |
| | | | | WO | 2007/023162 | A1 | |
| JP | 2007-55879 | A | 08 March 2007 | (Family: none) | | | |
| JP | 2006-219325 | A | 24 August 2006 | (Family: none) | | | |
| WO | 2009/041384 | A1 | 02 April 2009 | US | 2010/0196255 | A1 | |
| | | | | claims 1-10, paragraph [0037] | | | |
| | | | | EP | 2198959 | A1 | |
| | | | | KR | 10-2010-0058655 | A | |
| | | | | CN | 101827653 | A | |
| JP | 52-5473 | B1 | 14 February 1977 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009041384 A